# EUROPEAN PATENT APPLICATION

(11) **EP 1 308 882 A1**
(43) Date of publication of application: **07.05.2003**
(21) Application number: 00944363.1
(22) Date of filing: 07.07.2000
(51) Int. Cl.: G06K 17/00

(54) **IC CARD TERMINAL DEVICE**

(71) Applicant: FUJITSU LIMITED, Kawasaki-shi, Kanagawa 211-8588 (JP)
(72) Inventor: HOSOGOE, Takashi, Fujitsu Limited, Kawasaki-shi, Kanagawa 211-8588 (JP); HYODO, Yoshii, Fujitsu Limited, Kawasaki-shi, Kanagawa 211-8588 (JP); YAMATE, Yasumasa, Fujitsu Limited, Kawasaki-shi, Kanagawa 211-8588 (JP)
(74) Representative: Moutard, Pascal Jean
(86) International application number: JP0004581
(87) International publication number: WO02005203

(57) **Abstract**

Programs to be executed by the IC card terminal, which correspond to the IC card functions, are provided according to the present invention by a memory device, in particular, an IC card that can be attached to and removed from the IC card terminal.

## Description

### TECHNICAL FIELD

The present invention relates to an IC card terminal for accessing an IC card and executing IC card functions.

### BACKGROUND ART

An IC card is a plastic card containing an embedded LSI chip with on-chip CPU and memory. Since [an IC card] can ensure higher security and store a greater volume of data than a conventional magnetic card, a single card can be used to implement a plurality of functions such as credit card or electronic money functions. Various types of IC card terminals have been provided for accessing and communicating with these kinds of IC cards.

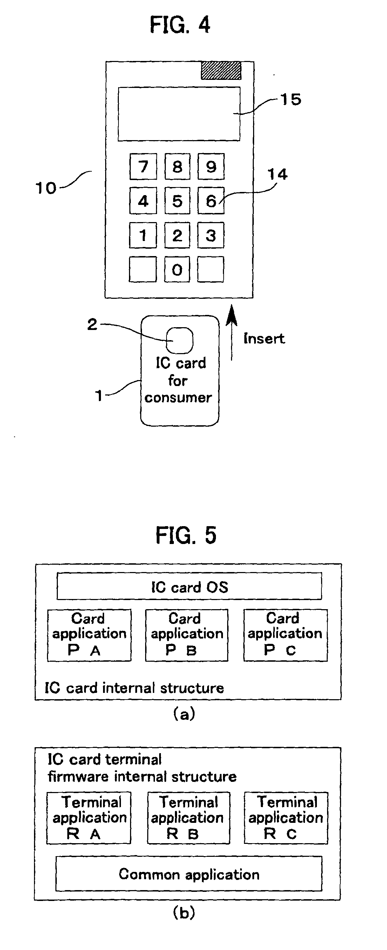

FIG. 4 is a schematic diagram of an IC card and IC card terminal. In FIG. 4, IC card 1 contains built-in LSI chip 2, which supports a plurality of functions such as credit card or electronic money functions. LSI chip 2 stores card-side application programs (hereafter, referred to as card applications) corresponding to each of the functions. Also, IC card terminal 10, which is a handy-type terminal as shown in the figure, for example, comprises an input part 14 for entering information such as an amount of money or password, a display part 15 using an LCD or other type of display, and an IC card insertion slot, which is not illustrated. In addition, IC card terminal 10 has an IC card reader/writer (not illustrated) for accessing an IC card to read and write data, an interface device (IFD) (not illustrated) for controlling communications between LSI chip 2 of IC card 1 and the reader/writer, and a built-in microcomputer (not illustrated) for storing terminal-side application programs (hereafter, referred to as terminal applications) corresponding to each of the functions as firmware and executing those programs.

FIG. 5 is a conceptual diagram of the internal structures of LSI chip 2 of IC card 1 and the firmware within IC card terminal 10. FIG. 5 (a), which is the application structure within LSI chip 2 of IC card 1, comprises card applications P_{A}, P_{B}, and P_{C}, which correspond to functions A,B, and C, respectively, and the IC card operating system (OS). FIG. 5 (b), which is the application structure of the firmware of IC card terminal 10, comprises terminal applications R_{A}, R_{B}, and R_{C}, which correspond to functions A, B, and C, respectively, and common application programs shared by each terminal application.

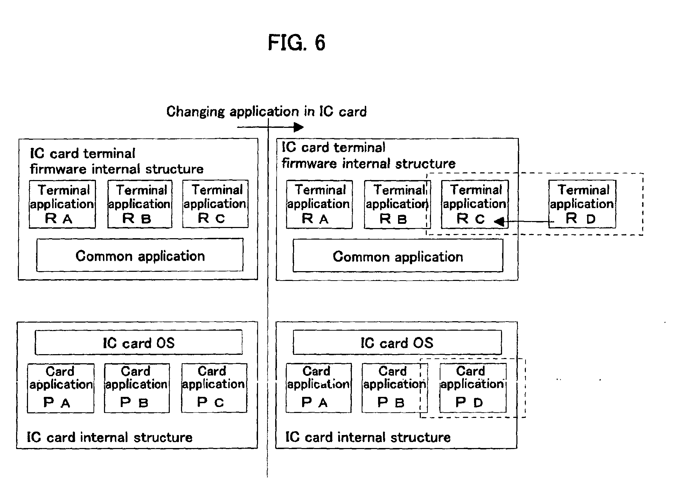

FIG. 6 is a diagram showing an example in which IC card functions are changed by using the conventional method. When the IC card functions are changed from functions A, B, and C to functions A, B, and D (when the card applications that are stored on the IC card are changed from card applications P_{A}, P_{B}, and P_{C} to card applications P_{A}, P_{B}, and P_{D}), the terminal applications that are stored in the firmware of IC card terminal 10 must also be changed from terminal applications R_{A}, R_{B}, and R_{C} to terminal applications P_{A}, P_{B}, and P_{D}.

However, to change terminal applications, the firmware must be switched, and that task is extremely troublesome.

On the other hand, although a magnetic disk drive can also be considered as a terminal application storage means, its use presents security-related problems since a magnetic disk drive can easily be accessed from an external source.

### DISCLOSURE OF THE INVENTION

An object of the present invention is to provide an IC card terminal that can easily support changes to IC card functions while ensuring security.

To accomplish the abovementioned object, the programs to be executed by the IC card terminal, which correspond to the IC card functions, are provided according to the present invention by a memory device, in particular, an IC card that can be attached to and removed from the IC card terminal. This enables the IC card terminal to easily support changes to or addition of IC card functions while ensuring security.

An IC card terminal of the present invention for accomplishing the abovementioned object, which communicates with an IC card for storing card programs corresponding to at least one function, preferably comprises a memory device for storing terminal programs corresponding to the abovementioned functions, and a processor for executing the abovementioned terminal programs while communicating with the abovementioned card programs of the abovementioned IC card, and is characterized in that the abovementioned memory device can be attached and removed.

The memory device is a separate IC card, which differs from the abovementioned IC card.

### BRIEF DESCRIPTION OF THE DRAWINGS

FIG. 1 is a diagram explaining an IC card terminal of an embodiment of the present invention;
FIG. 2 is a block diagram of an IC card terminal in an embodiment of the present invention;
FIG. 3 is a diagram showing an example in which IC card functions are changed by using the present invention;
FIG. 4 is a schematic diagram of an IC card and an IC card terminal;
FIG. 5 is a conceptual diagram of the application structures of LSI chip 2 of IC card 1 and the firmware within IC card terminal 10; and
FIG. 6 is a diagram showing an example in which IC card functions are changed by using the conventional method.

### BEST MODE FOR CARRYING OUT THE INVENTION

An embodiment of the present invention is described below according to the figures. However, the technical range of the present invention is not limited to the embodiment presented.

In an embodiment of the present invention, terminal applications corresponding to the various functions of an IC card possessed by a consumer (hereafter, referred to as a consumer IC card) are stored on a separate IC card. This separate IC card is provided to a store (agent) that uses an IC card terminal. In addition, the IC card terminal acquires terminal applications via the relevant separate IC card (hereafter, referred to as an agent card) to execute functions furnished by a consumer IC card.

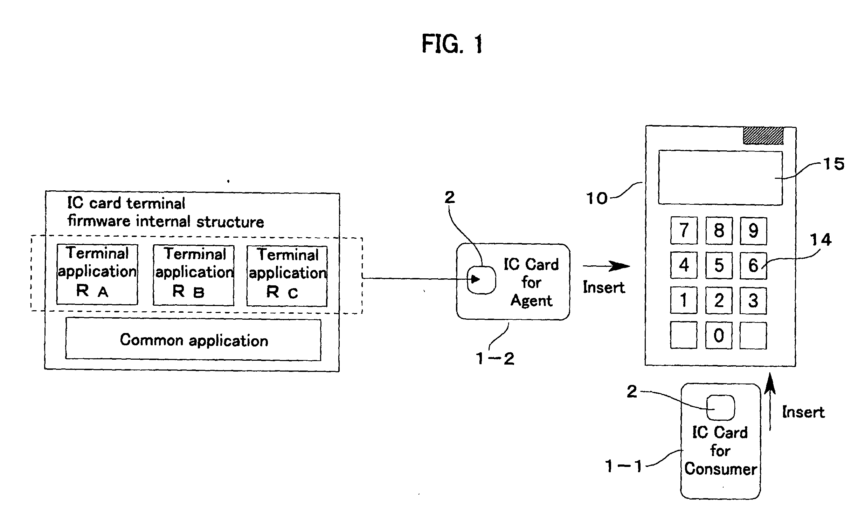

FIG. 1 is a diagram explaining an IC card terminal of an embodiment of the present invention. In FIG. 1, IC card terminal 10 acquires terminal applications R_{A}, R_{B}, and R_{C} from separate IC card 1-2, which stores terminal applications R_{A}, R_{B}, and R_{C} corresponding to functions A, B, and C, to execute functions A, B, and C for consumer IC card 1-1, which stores card applications P_{A}, P_{B}, and P_{C} corresponding to functions A, B, and C. In other words, IC card terminal 10 does not directly store terminal applications R_{A}, R_{B}, and R_{C} within its firmware. The common applications shared by each terminal application are directly stored in the firmware of IC card terminal 10.

Consumer IC card functions, for example, are credit card functions or electronic money functions. IC card terminal 10 is equipped with communication means for communicating with remote host computers via communication lines (including wireless links). When the IC card functions as a credit card, IC card terminal 10 carries out credit card transactions while sending various types of information such as a password or amount of money entered from input part 14 to a host computer or receiving authorization information from the host computer. Entered information is displayed in display part 15.

Also, when the IC card functions as electronic money, IC card terminal 10 reads the electronic money balance, which is stored in LSI chip 2 embedded in the IC card, updates the electronic money balance based on the amount of money entered from input part 14, and writes the updated amount of money on the IC card.

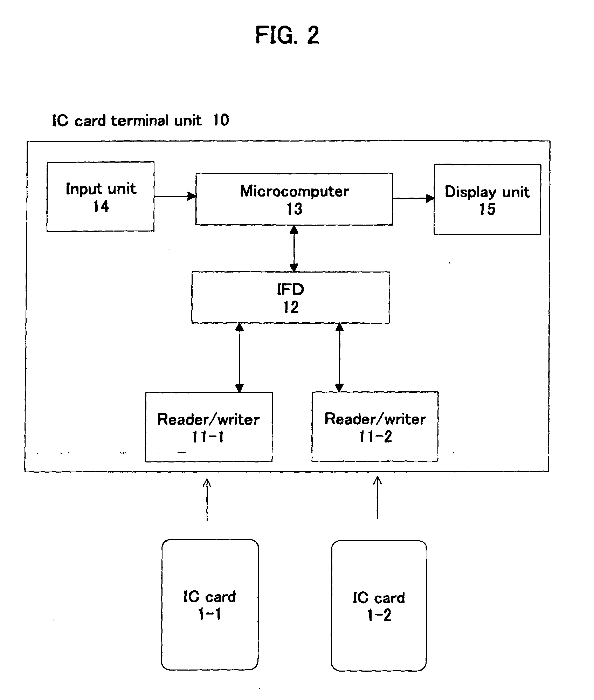

FIG. 2 is a block diagram of an IC card terminal in an embodiment of the present invention. IC card terminal 10 in an embodiment of the present invention has reader/writer 11-1 for accessing consumer IC card 1-1, and reader/writer 11-2 for accessing agent IC card 1-2, on which terminal applications are stored. IFD (interface device) 12 controls communications with IC card 1-1 according to reader/writer 11-1 and communications with IC card 1-2 according to reader /writer 11-2. Microcomputer 13 executes terminal applications that were acquired from agent IC card 1-2 to access card applications of consumer IC card 1-1.

Although reader/writer 11-1 for consumer IC card 1-1 and reader/writer 11-2 for agent IC card 1-2 are provided in FIG. 2, IC card terminal 10 may be equipped with only one reader/writer. In this case, there will also be only one IC card insertion slot (not illustrated), and agent IC card 1-2 is inserted in the IC card insertion slot to read the terminal applications in advance and store them in the microcomputer RAM before consumer IC card 1-1 is inserted in the IC card insertion slot to read card applications from consumer IC card 1-1.

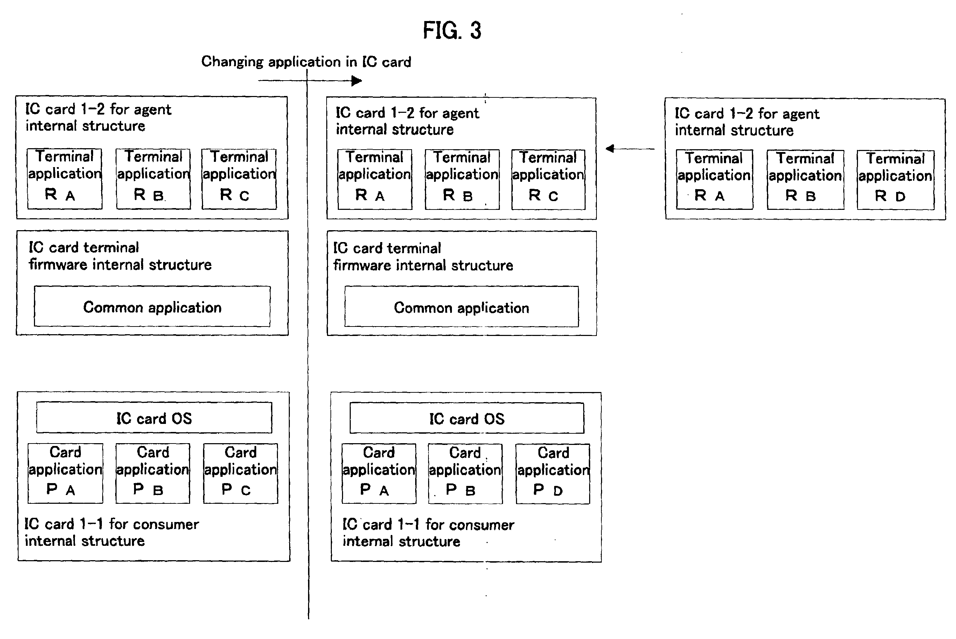

FIG. 3 is a diagram showing an example in which IC card functions are changed by using the present invention. When the functions of consumer IC card 1-1 are changed from functions A, B, and C to functions A, B, and D, the card applications that are stored on IC card 1-1 are changed from card applications P_{A}, P_{B}, and P_{C} to card applications P_{A}, P_{B}, and P_{D}. In other words, consumer IC card 1-1 on which card applications P_{A}, P_{B}, and P_{D} are stored is prepared. In addition, in an embodiment of the present invention, agent IC card 1-2 on which terminal applications R_{A}, R_{B}, and R_{D} are stored, which is prepared separately from agent IC card 1-2 on which terminal applications R_{A}, R_{B}, and R_{C} are stored, should be inserted in IC card terminal 10.

For example, a plurality of types of agent IC cards 1-2 on which terminal applications corresponding to different functions are stored may be provided according to the qualifications of the store managers. This will enable only certain functions to be processed according to the qualifications of the managers.

In an embodiment of the present invention, agent IC cards on which terminal applications are stored are provided in this way. In addition, by making the IC card terminal acquire terminal applications from those agent IC cards, situations in which consumer IC card functions are changed can be supported with flexibility. In other words, when consumer IC card functions are changed, the IC card terminal acquires terminal applications from an agent IC card on which terminal applications corresponding to those changes are stored.

Also, since IC card security is superior to magnetic disk security, the IC card is optimal as a removable memory device.

An embodiment of the present invention is not limited to changes in IC card functions, but may also be applied in a similar manner to add functions.

The IC card functions in an embodiment of the present invention are not limited to credit card functions or electronic money functions. For example, they may include point service functions corresponding to the purchase amount for purchases using IC cards, customer management functions for managing purchase history and other information, or debit card functions.

The memory device for storing terminal applications is not limited to an IC card. For example, it may be a removable memory device for an IC card terminal such as a memory card. In addition, an IC card is not limited to having a plurality of functions, but may have only one function.

### INUSTRIAL APPLICABILITY

As explained above, the programs to be executed by the IC card terminal, which correspond to the IC card functions, are provided according to the present invention by a memory device, in particular, an IC card that can be attached to and removed from the IC card terminal. This enables the IC card terminal to easily support changes to or the addition of IC card functions while ensuring security.

The range of protection of the present invention extends to the inventions that appear in the claims and equivalent inventions, and is not limited to the abovementioned embodiment.

## Claims

1. An IC card terminal for communicating with an IC card on which card programs corresponding to at least one function are stored, comprising:
a memory device for storing terminal programs corresponding to said functions; and
a processor for executing said terminal programs while communicating with said card programs of said IC card, and
wherein said memory device can be attached and removed.

2. The IC card terminal according to Claim 1,
wherein said memory device is a separate IC card, which differs from said IC card.

3. An IC card terminal comprising:
an IC card reader into which first and second IC cards, which each have a plurality of functions, are inserted;
a memory for storing a program corresponding to a specific function within said first IC card, which were selectively read from said second IC card by using said IC card reader; and
a processor for executing processing corresponding to said specific function of said first IC card according to said program stored in said memory.
